(19) **Europäisches Patentamt / European Patent Office / Office européen des brevets**

(11) **EP 4 148 405 B1**

(12) **EUROPEAN PATENT SPECIFICATION**

(45) Date of publication and mention of the grant of the patent:
**08.01.2025 Bulletin 2025/02**

(21) Application number: **21195483.9**

(22) Date of filing: **08.09.2021**

(51) International Patent Classification (IPC):
**G01K 15/00** $^{(2006.01)}$

(52) Cooperative Patent Classification (CPC):
**G01K 15/002**

(54) **SYSTEM AND METHOD FOR CALIBRATING A SENSOR**

SYSTEM UND METHODE ZUR KALIBRIERUNG EINES SENSORS

SYSTÈME ET PROCÉDÉ D'ÉTALONNAGE DE CAPTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.03.2023 Bulletin 2023/11**

(73) Proprietor: **Ametek Denmark A/S 3450 Allerod (DK)**

(72) Inventors:
• **LARSEN, Jørgen Reinholdt 3320 Skævinge (DK)**
• **HARSLUND, Jan Haakon 3550 Slangerup (DK)**

(74) Representative: **Plougmann Vingtoft a/s Strandvejen 70 2900 Hellerup (DK)**

(56) References cited:
CN-A- 107 101 747     CN-A- 111 307 337
CN-A- 112 304 473     CN-U- 209 979 097

**Description**

FIELD OF INVENTION

The invention relates to a system and method for calibrating a temperature sensor according to claims 1 and 18, respectively.

BACKGROUND

Temperature sensors find used in many applications of use and in some of applications of use, such as food production, production of chemicals, drugs and medicaments or other production, a correct determination of a temperature may be of vital importance which determination requires a calibration of a given sensor to e.g. learn to which extend the sensor provides a correct read-out. Further, a sensor may drift over time, whereby a calibration of the sensor e.g. during manufacturing may only be valid for a shorter or longer period of time such that a recalibration of the sensor may be needed at some points in time.

Calibration may in some instances be carried out by controlling the temperature of a fluid surrounding the temperature sensor and use a reference temperature sensor defined to provide correct read-outs placed in the fluid.

In addition, many temperature sensors are designed to fit into a production facility whereby the actual sensing element may be encapsulated into a structure used to fit the production facility and at the same time place the sensing element in a desired measuring position. By this, a complex heat transfer occurs between the fluid surrounding the temperature sensor and the actual sensing element, which complex heat transfer typically involves one or more timescales at which transfer occurs.

On top that, a calibration carried out at a single temperature may not be sufficient as e.g. a deviation between read-out the sensor and the correct temperature may depend on the actual temperature level at which the calibration is carried out. Hence, an improved system and method for calibrating a temperature sensor would be advantageous, and in particular a more efficient and/or reliable system and method for calibrating a temperature sensor would be advantageous.

CN 209 979 097 U discloses a temperature calibration bath comprising a stirrer and a heater on one side of the tank, and a partition wall separating this side from the temperature sensor to be calibrated. The wall has ducts such that due to enforced circulation of the calibration liquid temperature gradients are decreased.

OBJECT OF THE INVENTION

It is a further object of the invention to provide an alternative to the prior art. In particular, it may be seen as an object of the present invention to provide or at least mitigate the above mentioned problems.

SUMMARY OF THE INVENTION

Thus, the above described object and several other objects are intended to be obtained in a first aspect of the invention by providing a system for calibrating a temperature sensor, said system may comprising

• said temperature sensor comprising an elongate element having at a first end a thermos element, preferably being an electrical thermos element;
• a receptacle comprising a tubular wall, such as a cylindrical wall, closed at a lower end by a bottom thereby defining an open ended cavity configured to hold a liquid and to receive at least a part of said elongate element so that the first end with the thermos element is contained within cavity;
• a controllable energy source configured to add to or remove heat from the cavity;
• an elongate fluid directing element being a tubular element, such as a cylindrical element, having outer diameter or equivalent diameter being less than an inner diameter or equivalent inner diameter of the tubular wall and having an upper end and a lower end,

  said fluid directing element is arranged within the cavity and being dimensioned to provide an outer flow passage between an outer surface of the fluid directing element and an inner surface of tubular wall and an inner flow passage at an inner side of the elongate fluid directing element, wherein the outer flow passage and the inner flow passage are in fluid communication at the upper end and at the lower end;

• a reference thermos element arranged to sense the temperature within the cavity;
• a controller configured to control the amount of heat added to or removed from the cavity.

In a preferred embodiment, the controller may further be configured to obtain measurements from the reference thermos element and thermos element and provide a calibration for the thermos element on the basis of said measurements. In other preferred embodiments, the system may further comprising a stirrer to promote a flow of fluid going upward in the outer flow passage and downward in the inner flow passage or vice versa, said stirrer preferably comprising a magnetic stirrer or a stirrer arranged on a shaft rotated by an electrical motor.

The temperature sensor may comprise at a position distal to the first end of the elongate element a socket from which the elongate element extend, and wherein said socket may has a thickness and a diameter or equivalent diameter being larger than a diameter or equivalent diameter of the elongate element.

In some embodiments, the elongate fluid directing element may comprising

- an outer diameter or equivalent outer diameter and a wall thickness providing an abutment surface at the upper end and wherein the temperature sensor may be arranged with at least a part of a lower surface of the socket abutting said abutment surface to provide a thermal contact between the fluid directing element and the socket,
- at least one through going opening or at least two through going openings distributed, preferably along a perimeter of the fluid directing element at the upper end thereof, said through going opening(s) may provide said fluid communication at the upper end,

and wherein an opening may be provided between said lower end and said bottom.

In a preferred embodiment, the lower end of the elongate fluid directing element may be bevelled.

The elongate fluid directing element may comprise at its upper end a supporting flange extending horizontally beyond a cross section of the open end of the cavity so that the temperature sensor may be supported at the open end of the cavity.

In another embodiment, the system may comprise a basin arranged at the open end of the cavity, said basin may comprising an bottom with an through going opening so that the basin may be in fluid communication with the cavity and an wall protruding upwardly from the bottom and may have an internal diameter or equivalent diameter being larger than the internal diameter or equivalent diameter of the open end of the cavity.

Preferably, the elongate fluid directing element has a wall thickness of larger than 2.0 mm, such as larger than 3.0 mm, preferably larger than 5.0 mm and smaller than 12.0 mm such as smaller than 10.0 mm and preferably a wall thickness of 9.00 mm.

In some embodiments, the elongate fluid directing element may have a height being less than a height of the tubular wall.

Preferably, the elongate fluid directing element is made, such as made solely from aluminium, copper, brass or stainless steel.

In another embodiment, the fluid directing element may comprise a number vertically extending panels, arranged on a perimeter of e.g. a circle with a space in between each panels.

In another embodiment, the electrical thermos element may comprise a thermistor such as a negative temperature coefficient resistor or a positive temperature coefficient resistor.

In another embodiment, the electrical thermos element may comprise a thermocouple.

In some embodiments, the reference thermos element may be arranged within the cavity at a position having substantially the same temperature as the thermos element, such as at the same horizontal level at which the thermos element may be arranged.

In another preferred embodiment, the elongate element, the elongate fluid directing element and the tubular wall may be co-axially arranged.

Preferably, the energy source comprises one or more electrical heating elements, such as ohmic heating element(s), Peltier element(s), a Stirling cooler or combinations thereof.

The invention further relates to a method being adapted to enable a calibration of a temperature sensor, said method may be utilizing the system, and may comprise:

- arranging the temperature sensor in the cavity;
- adding a fluid, such as silicon oil, water, cooking oil or an oil approved for pharmaceutical use, into the cavity in an amount sufficient to submerge the elongate fluid directing element and the thermos element and at least a section of the elongate element;
- controlling the energy source to heat or cool the fluid in the cavity to one or more temperatures, where the temperature(s) may be determined by the reference thermos element or the thermos element;
- when a thermal equilibrium may be established in the fluid for said one or more temperatures:

  ∘ determining by use of the thermos element and the reference thermos element a deviation between the these two temperatures, if any, and calibrate the temperature sensor based on said deviation.

In an embodiment, the calibration may comprise determining a correction for the temperatures sensor, wherein the correction may be an arithmetic correction or a database storing deviations as a function of measured temperatures.

Terms used herein are used in a manner being ordinary to a skilled person. Some of these terms are elucidated here below:

A surface facing the inner surface of receptacle is referred to as an outer surface unless otherwise presented.

*"Equivalent diameter" typically* refers to a diameter calculated by:

$$D = \sqrt{\frac{4 * A}{\pi}}$$

Where "A" is the cross sectional area and "*D*" is the equivalent diameter.

*"Elongate"* is preferably used to reference an element having a longitudinal extension being larger than a transverse extension of the element.

Orientations, such as down, up, horizontally are presented with reference to the accompanying figures.

BRIEF DESCRIPTION OF THE FIGURES

The present invention and in particular preferred embodiments according to the invention will now be described in more detail with regard to the accompanying figures. The figures show ways of implementing the present invention and are not to be construed as being limiting to other possible embodiments falling within the scope of the attached claim set.

Figure 1 shows in a cross sectional view a first embodiment of a system for calibrating a temperature sensor;

Figure 2 shows in a cross section view a second embodiment of a system for calibrating a temperature sensor;

Figure 3 is a photograph showing the elongate fluid directing element used in the second embodiment (the supporting flange 27 as disclosed below is not present in embodiment shown);

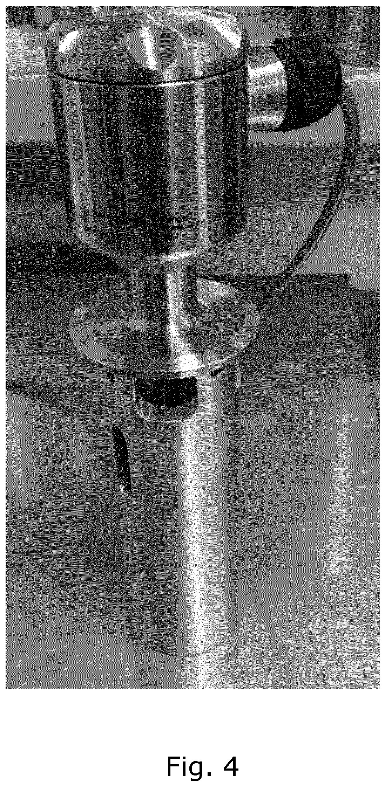

Figure 4 is a photograph showing the elongate fluid directing element and the temperature sensor used in the second embodiment;

Figure 5 is a graph illustrating experimental results obtained by use of the present invention;

Figure 6 shows in a cross section view a third embodiment of a system for calibrating a temperature sensor;

Figure 7 is a graph illustrating experimental results obtained by use of the present invention;

Figure 8 illustrates a suspension element according to one embodiment of the invention;

Figure 9 illustrates an elongate fluid directing element according to one embodiment of the invention; and

Figure 10 illustrates a system for calibrating temperature sensor according to one embodiment of the invention.

DETAILED DESCRIPTION OF PREFERRED EMBODIMENTS

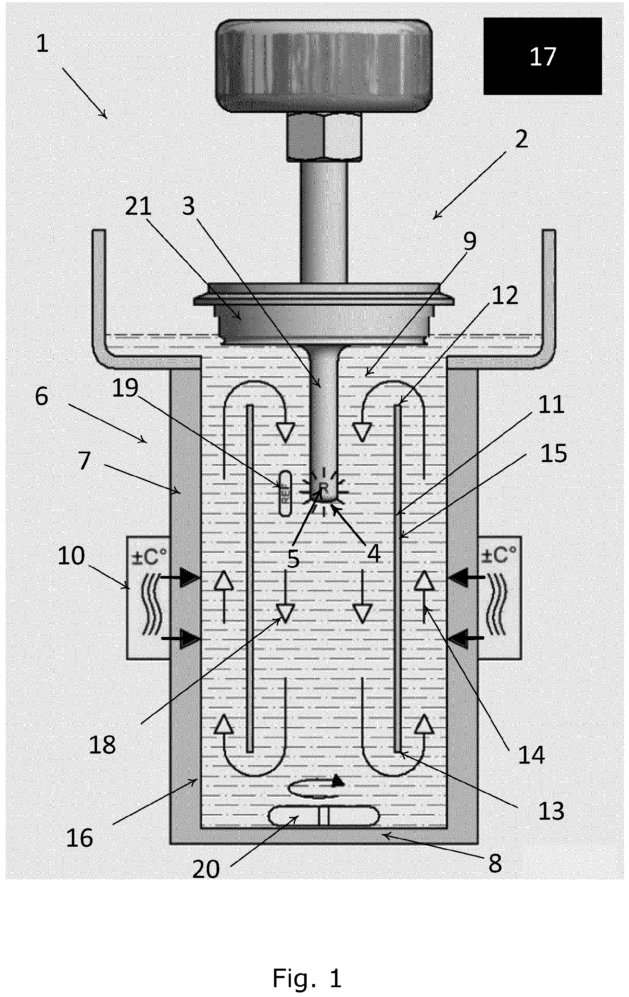

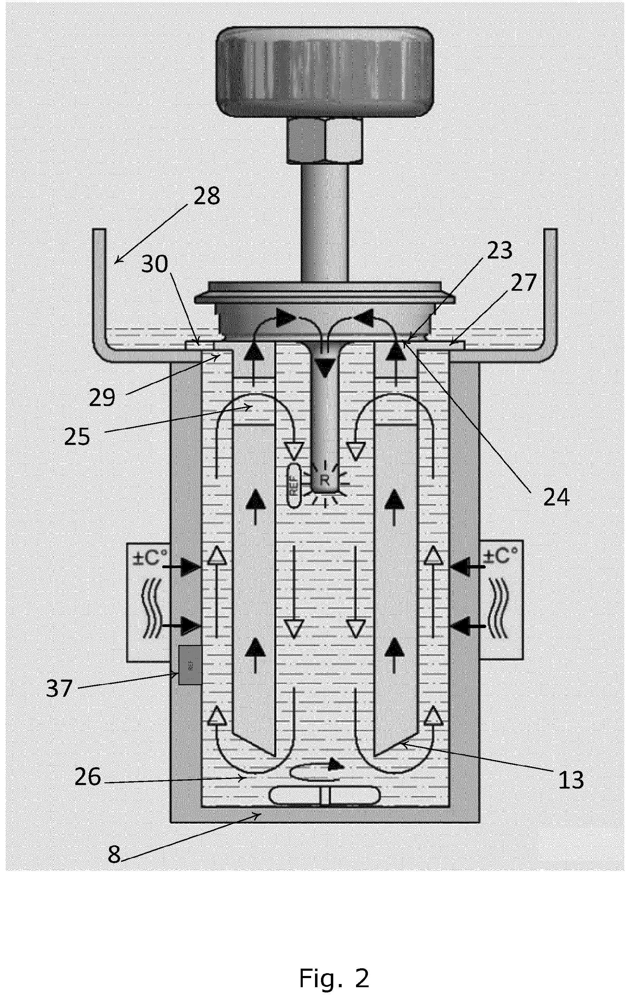

With reference to figs. 1 and 2, two embodiments of the invention will now be disclosed in greater details. In general, the invention relates to a system 1 for calibrating a temperature sensor 2. The temperature sensor 2 is typically of a type which is to be used in production facility or other facility where the temperature of medium, which may be liquid or gaseous, is to be monitored. The temperature sensor 2 does therefore not as such forms an integral part of the system as the temperature sensor 2 may be arranged in the system for calibration and after calibration be placed in the facility where the temperature is to be monitored. Thus, in use, the system has received the temperature sensor 2.
In figs. 1 and 2 white headed arrows are used to indication fluid motion whereas black headed arrows are used to indication heat conduction.
The temperature sensor 2 has as shown in the figures an elongate element 3 having at a first end 4 a thermos element 5. The thermos element 5 may be an electrical thermos element but it may also be a mechanical thermos element 5. The thermos element 5 provides a read-out representing the temperature as sensed by the temperature sensor 2.
The system 1 comprising a receptacle 6 which inter alia receives the elongate element 3 of the temperature sensor 2. The receptacle 6 has a tubular wall 7, such as a cylindrical wall, closed at a lower end by a bottom 8 thereby defining an open-ended cavity 9. This cavity 9 is configured to hold a liquid by being impermeable to the fluid to be added to the receptacle 6 in the calibration procedure. It is also configured to receive at least a part of said elongate element 3 at least to an extent so that the first end 4 with the thermos element 5 is contained within cavity 9. Thereby, when a fluid is provided in the receptacle 6, the thermos element 5 is submerged in the fluid.
During calibration, the temperature of the fluid contained in the receptacle 6 is to be controlled, e.g. heated or cooled to one or more temperatures. To accomplish this, a controllable energy source 10 is applied and the energy source 10 is configured to add to or remove heat from the cavity 9. A predefined temperature is often used during calibration, and firstly the fluid contained in the receptacle 6 is heated or cooled by the controllable energy source 10 to the predefined temperature. When the reference thermos element 19 provides a stable temperature, being a temperature within a predefined range, then secondly the temperature sensor 2 measures and provides a temperature. This calibration process is preferably carried out multiple times, using different predefined temperatures, in order to calibrate the temperature sensor 2. Based on the calibration process, the provided temperatures by the temperature sensor 2 and the predefined temperatures, it is possible to derive the actual value of the temperature of the fluid in the receptacle 6 within the calibration range using interpolation. In the illustrated embodiments, the energy source 10 is arranged on an outer surface of the tubular wall 7. However, the energy source 10 may be arranged differently, such as embedded in the tubular wall 7, on the inner surface of the tubular wall 7, arranged in the cavity 9 so as to be in direct contact with the fluid or even combinations thereof. Further, during calibration, a predefined temperature is used and after a predefined amount
As illustrated, the receptacle has a longitudinal extension in vertical direction which may give rise to a vertical and/or horizontal temperature gradient in the fluid contained in the receptacle 6. The temperature gradient may also be provided by the upper end of the temperature sensor 2 having a relatively high mass which may not have the same temperature as the fluid whereby a conduction of heat may be provided between the elongate element 3 and the upper end of the temperature sensor 2.

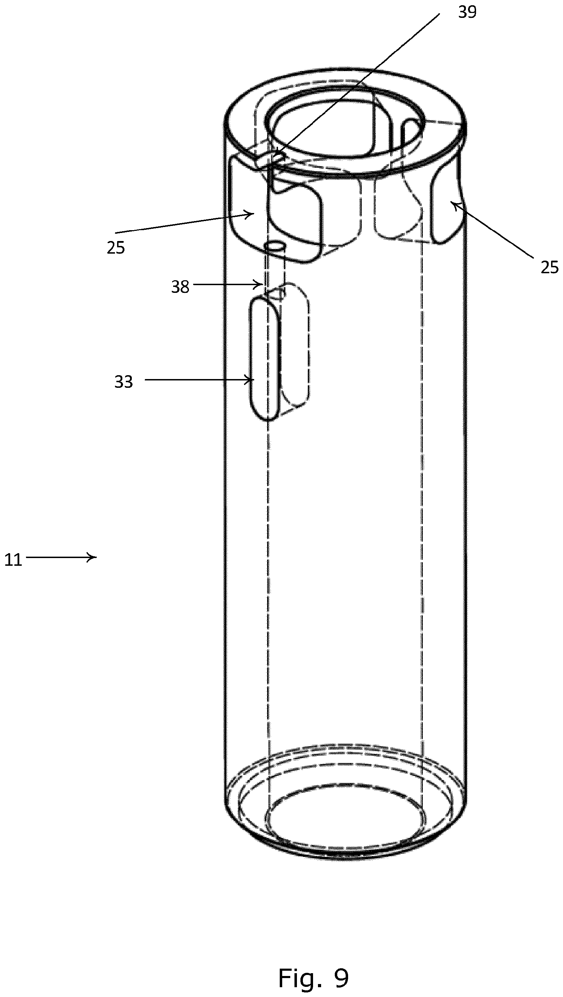

The invention suggest solving issues with temperature gradients inter alia by controlling the motion of the fluid within the receptacle 6. To do this, the system 1 has an elongate fluid directing element 11 typically configured to assist in creating a circulating motion of the fluid. The elongate fluid directing element 11 has an upper end 12 and a lower end 13 and is arranged within the cavity 9 and is dimensioned to provide an outer flow passage 14 between an outer surface 15 of the fluid directing element 11 and an inner surface 16 of tubular wall 7, and an inner flow passage 18 inside and inner side the elongate fluid directing element 11. The outer flow passage 15 and the inner flow passage 18 are in fluid communication at the upper end 12 and at the lower end 13. As will become apparent in the following, the fluid directing element 11 may in preferred embodiments be a tubular or cylindrical element comprised by a solid wall, including in some embodiments through going openings. One embodiment of such a fluid directing element is illustrated in fig. 9.

The system also comprises a reference thermos element 19 arranged within the cavity 9. This reference thermos element 19 is the element assigned to provide reference temperature measurements, that is the calibration of the temperature sensor 2 is made up against the measurements provided by the thermos element 19.

In some embodiments, a secondary or alternative reference temperature measurement may be carried out at a reference thermos element void 37 at another position different from reference thermos element 19. The reference thermos element void 37 is preferably arranged in the receptacle 6 close to the energy sources 10.

A controller 17 is provided and the controller is configured to control the amount of heat added to or removed from the cavity 9 by controlling the energy source 10, obtain measurements from the reference thermos element 19 and thermos element 5 and, preferably, provide a calibration for the thermos element 5 on the basis of said measurements.

In a not shown embodiment, a thermos element is embedded in the tubular wall 7, and such a thermos element may be used to assisting in controlling the temperature in the receptacle 6.

While the motion of fluid in the receptacle can be buoyancy driven by heating and cooling by use of the energy source 10, such a buoyancy driven flow may be too weak or slow to provide a calibration within a reasonable time period. To avoid this, or even to provide the circulation of fluid if not occurring, the system may comprising a stirrer 20 to promote a flow of fluid going upward in the outer flow passage 14 and downward in the inner flow passage 19 or vice versa. In the embodiments shown in figs. 1 and 2, the stirrer 20 is a magnetic stirrer but other types of stirrers such stirrer arranged on a shaft rotated by an electrical motor may be used.

The elongate fluid directing element 11 is in the embodiments shown as a cylindrical element, but it may be a tubular element having outer diameter or equivalent diameter (for a tubular element) being less than an inner diameter or equivalent inner diameter of the tubular wall 7. The elongate fluid directing element 11 is typically a straight element and the elongate fluid directing element 11 is typically defined by a tubular wall having thickness.

As the temperature sensor 2 in many applications is to be mounted in a facility, the temperature sensor 2 may have at a position distal to the first end 4 of the elongate element 3 a socket 21, sometimes also referred to as a "process connector", from which the elongate element 3 extend. Such a socket may come in a variety of shapes, but for the purpose of disclosing the present invention, the socket 21 is in some embodiments defined to have a thickness and a diameter or equivalent diameter. The diameter or equivalent diameter of the socket 21 may be larger than a diameter or equivalent diameter of the elongate element 3, and the thickness of the socket 21 may be smaller, equal to or larger than diameter or equivalent diameter of the elongate element 3. The thickness is typically measured transversely to the diameter, and with reference to figs. 1 and 2 the thickness is measured in vertical direction whereas diameter is measured in horizontal direction.

With reference to fig. 1, the fluid directing element 11 is a cylindrical element with no through going openings provided in the wall. The fluid directing element 11 has a shorter longitudinal extension than the depth of the receptacle 6 and is arranged within the receptacle 6 in a position providing an overflow passage at the upper end 12 and an underflow passage at the lower end 13. The fluid directing element 11 is typically suspended in position by not illustrated suspension element, such as spacers or fixation elements.

Similarly, the temperature sensor 2 in the embodiment shown in fig. 1 is typically suspended in the show position by suspension elements not illustrated.

Reference is now made in particular to fig. 2. As illustrated in fig. 2. the elongate fluid directing element 11 has an outer diameter or equivalent outer diameter and a wall thickness providing an abutment surface 23 at the upper end 12. This abutment surface 23 is provided to abut with an underside of the temperature sensor 2. The temperature sensor 2 is accordingly arranged with at least a part of a lower surface 24 of the socket 21 abutting the abutment surface 23. By this abutment a thermal contact between the fluid directing element and the socket 21 is provided so that heat may be conducted (as illustrated by the arrows in fig. 2) from the elongate fluid directing element 11 and to the socket 21 (or vice versa depending on the sign of temperature gradient). Besides acting as a surface through which heat can be conducted, the abutment surface may also serves as a supporting element for the temperature sensor 2.

When the temperature sensor 2 abuts the abutment surface 23, the abutment surface 23 forms a closed area, whereby flow of fluid is substantially prevented or limited in between the abutment surface 23 and the lower surface 24 of the socket. Thereby, when fluid circulate in the receptacle 6, the fluid is essentially prevented from flowing out of the receptacle 6 in between the abutment surface 23 and the lower surface 24. However, as the fluid may expand with increasing temperature, the abutment may be provided so that the fluid may sieve out of the receptacle 6 in between the abutment surface 23 and the lower surface 24. Such a sieving possibility may be provided by the weight of the temperature sensor 2 is suitable low so that the weight do not provide a hermetic fluidic seal but allow for fluid to pass between the abutment surface 23 and the lower surface 24. Alternatively, or in combination a small opening 30 (see fig. 2) may be provided to allow fluid exchange as detailed below.

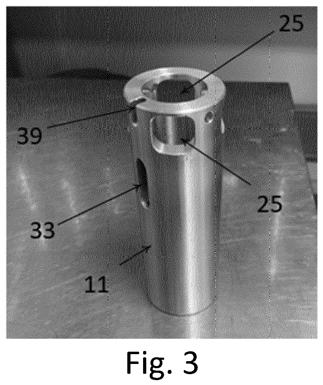

To allow for the above disclosed circulation of fluid in the receptacle 6, two through going openings 25 are provided at the upper end of the elongate fluid directing element 11 to provide the fluid communication at the upper end 12. These through going openings are perhaps most clearly visible in fig. 3. It is to be noted that the number of through going openings is not limited to two, as a single or a plurality of through going openings 25 may be provided. When more than one through going opening are provided they are typically evenly distributed, preferably along a perimeter of the fluid directing element at the upper end (12) thereof, to allow for a degree of symmetry in the fluid motion.

At the lower end 13 of the elongate fluid directing element 11, an opening 26 is provided between said lower end 13 and the bottom 8. This opening 26 is in the illustrated embodiment provided by the lower end of the elongate fluid directing element 11 being positioned in distance from the bottom 8.

As illustrated in fig. 2, the lower end 13 of the elongate fluid directing element is bevelled, although this is not essential for the operation of the invention. The orientation of the bevel may be provided depending on the orientation of the circulation.

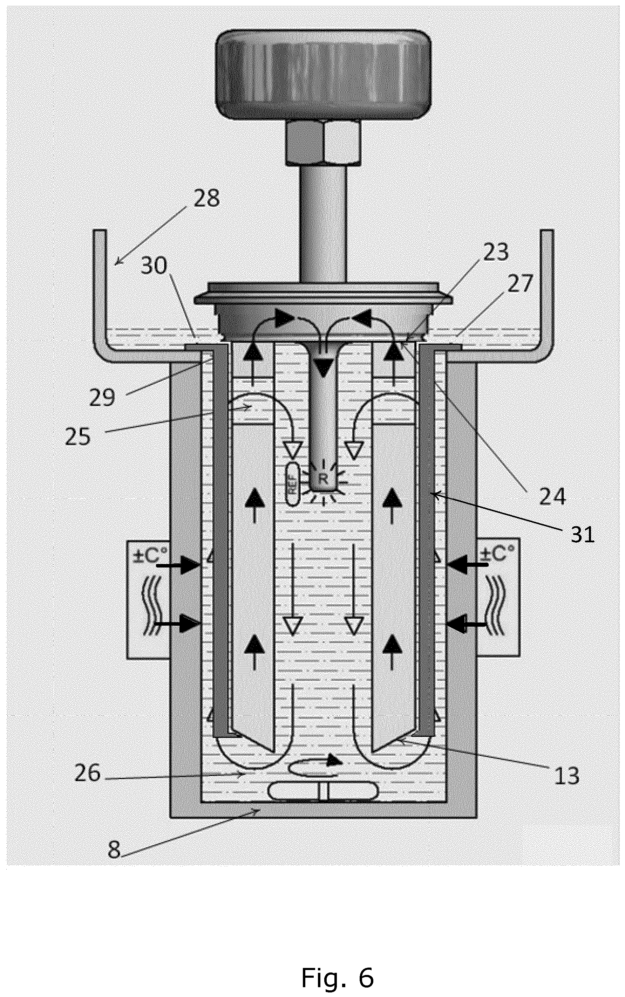

The elongate fluid directing element 11 shown in fig. 2 has at its upper end 12 a supporting flange 27 extending horizontally beyond a cross section of the open end of the cavity 9. This supporting flange rest on an upwardly facing surface of the open ended cavity 9 whereby the temperature sensor is supported at the open end of the cavity 9. In some embodiments, the supporting flange 27 is comprised in a suspension element 31 as illustrated in fig. 6.

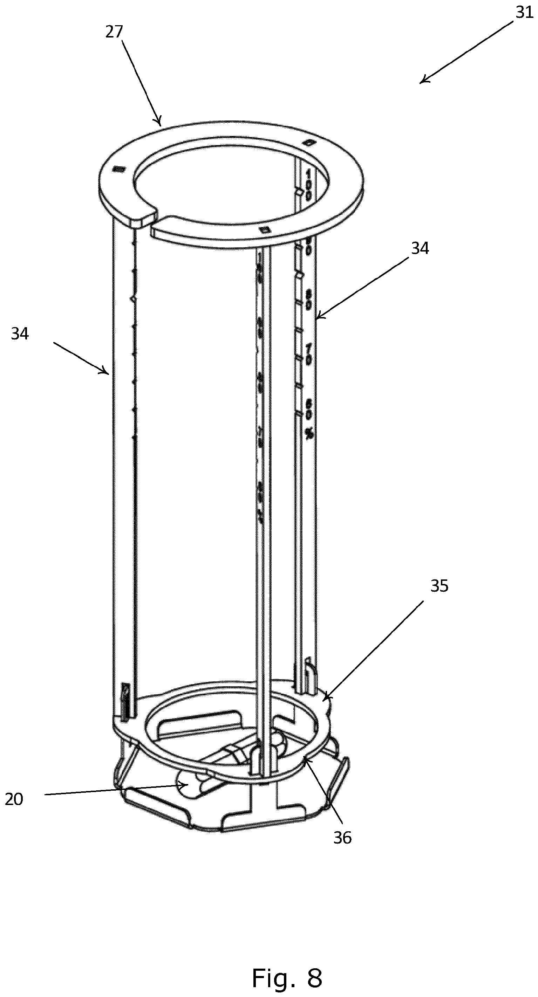

With reference to figure 8, one embodiment of a suspension element 31 will now be detailed. In the embodiment shown the suspension element 31 comprises a suspension element bottom 36, whereon the stirrer 20 may be placed. The suspension element bottom 36 is connected to a supporting rim 35 through one or more extending member(s) 34. In the shown embodiment, the suspension element 31 comprises three extending members 34, but in other embodiments, it may be relevant to a different construction, such as two extending members 34, such as four extending members 34. The supporting flange 27 as detailed above, is arranged in the opposite end of the suspension element bottom 36, and connected to the extending members 34. Both the supporting flange 27 and the supporting rim 35 are preferably ring-shaped.

The suspension element 31 besides serving as a suspension element for the fluid directing element 11, may also be used to limit fluid circulations and turbulence in the bottom part of the receptacle 6 around the opening 26, the bottom 8 and the lower end 13, and ensure that fluid is circulated around through both the inner flow passage 18 and the outer flow passage 14.

It is often beneficial that at least a section of the socket 21, preferably the lower surface 24 of the socket 21, is exposed to the fluid so that the fluid can be used to heat or cool at least a section of the socket 21. To accomplish this and allowing volume changes of liquid over temperature, the system has a basin 28 arranged at the open end of the cavity 9. The basin 28 has a bottom with a through-going opening 29 so that the basin 28 is in fluid communication with the cavity 9. The basin 28 also has a wall protruding upwardly from the bottom and having an internal diameter or equivalent diameter being larger than the internal diameter or equivalent diameter of the open end of the cavity 9. The basin 28 is furthermore dimensioned so as to receive the socket 21, or at least a section thereof.

It is beneficial to have the same heat transfer to the socket at many such as essentially all temperatures, as heat transfer to the socket influences the temperature measurement by thermos element 5. In the embodiment shown in fig. 1, this has to be accomplished by adjusting liquid level with change of temperature or by adjusting sensor 2 height and/or position.

In the embodiment shown in fig. 2, a small opening 30 is provided in the flange 27 to allow fluid to be exchanged between the receptacle 6 and the basin as temperature changes but without creating liquid flow in the basin and thereby minimizing heat transfer to other surfaces of the socket 21 than 24.

As disclosed herein, the fluid directing element 11 besides serving as an element directing fluid motion, the element 11 may also serve the purpose of conducting heat in the longitudinal direction of the element 11 towards or away from the socket 21 or in general. To accomplish this heat conducting purpose, the wall thickness can be chosen according to a particular preferred used, preferably also taking into consideration the heat capacity and the heat transfer coefficient of the elongate fluid directing element 11. Typically dimensions of the wall thickness of the elongate fluid directing element 11 is a wall thickness of larger than 2.0 mm, such as larger than 3.0 mm, preferably larger than 5.0 mm and smaller than 12.0 mm such as smaller than 10.0 mm and preferably a wall thickness of 9.00.

As presented herein, the elongate fluid directing element 11 has in preferred embodiments a height being less than a height of the tubular wall 7.

To provide a good heat transfer coefficient of the elongate fluid directing element 11, the elongate fluid directing element 11 may be made, such as made solely from, aluminium, copper, brass, or stainless steel. In further embodiments, heat pipes may be embedded in the elongate fluid directing element 11 to improve heat transfer.

While the above disclosed embodiments comprises an elongate fluid directing element 11 being embodied as an tubular structure being essentially impermeable to fluid along a larger longitudinal extension, the fluid directing element may in other embodiments comprise a number vertically extending panels, arranged on a perimeter of e.g. a circle with a space in between each panels.

In preferred embodiments the electrical thermos element 5 is or comprised by a thermistor such as a negative temperature coefficient resistor or a positive temperature coefficient resistor. In other embodiments, the electrical thermos element 5 is or comprised by a thermocouple.

To obtain a simple correlation between the temperature measured by the thermos element 5 and the reference thermos element 19, the reference thermos element 19 is, as illustrated in figs. 1 and 2, arranged within the cavity 9 at a position having substantially the same temperature as the thermos element 5. This may as disclosed be at the same horizontal level at which the thermos element 5 is arranged, and inside the elongate fluid directing element 11. However, as the motion of the fluid may provide a thermal equilibrium, in the sense that different positions in the receptacle has substantially equal temperature, the reference thermos element 19 may be placed at other positions within the receptacle 6.

To obtain at least some symmetry in the fluid motion and thereby at least some symmetry in the temperature distribution, if any, the elongate element 3, the elongate fluid directing element 11 and the tubular wall 7 may be co-axially arranged.

The energy source may be one or more electrical sources, such as ohmic heating element(s), Peltier element(s), a Stirling cooler or combinations hereof.

Calibration of a temperature sensor by use of the embodiments may typically involve the following steps.

Initially, the system is set-up which involves arranging the temperature sensor in the cavity 9 and adding a fluid, such as silicon oil, water, cooking oil or an oil approved for pharmaceutical use, into the cavity in an amount sufficient to submerge the elongate fluid directing element and the electrical thermos element an at least a section of the elongate element. In the embodiment including a basin 28, fluid is preferably added so that at least a part of the socket 21 becomes submerged having the fluid in contact with 24.

The fluid may be selected in accordance with the specific use of the temperature sensor, and the conditions under which the temperature sensor 2 is to operate in a facility may be reflected in the choice of fluid, e.g. selecting a fluid having similar or equal fluid and heating characteristics to the fluid of the facility.

Once the temperature sensor 2 and the fluid are provided in the cavity 9, the controller begin to control the energy source 10 to heat or cool the fluid in the cavity 9 to one or more temperatures. These temperatures are typically preselected and preferably selected to cover a span of operation of the temperature sensor 2. It worth noting that the temperature may be determined either by the reference thermos element 19 or a thermos element in the tubular wall 7 as a calibration of the thermos element 5 is to be determined. In some embodiments, the elongate fluid direction element 11 may comprise a thermos element cavity 33 as illustrated in fig. 3 and adapted to hold and/or fit the reference thermos element 19. The thermos element cavity 33 ensures that the thermos element 19 is kept in place during the temperature measurements.

When a thermal equilibrium is established in the fluid for the selected temperature, a deviation, if any, between the measurement made by the reference thermos element 19 and the thermos element 5 is determined and this deviation is used as a calibration for temperature sensor 2. A thermal equilibrium may be established based on that, the temperature of thermos element 19 and thermos element 5 have not changed more than a predefined value in a predefined time. For example 0.05°C in 10 minutes.

In preferred embodiments, the calibration comprising determining a correction for the temperatures sensor 2, wherein the correction is an arithmetic correction or a database storing deviations as a function of measured temperatures.

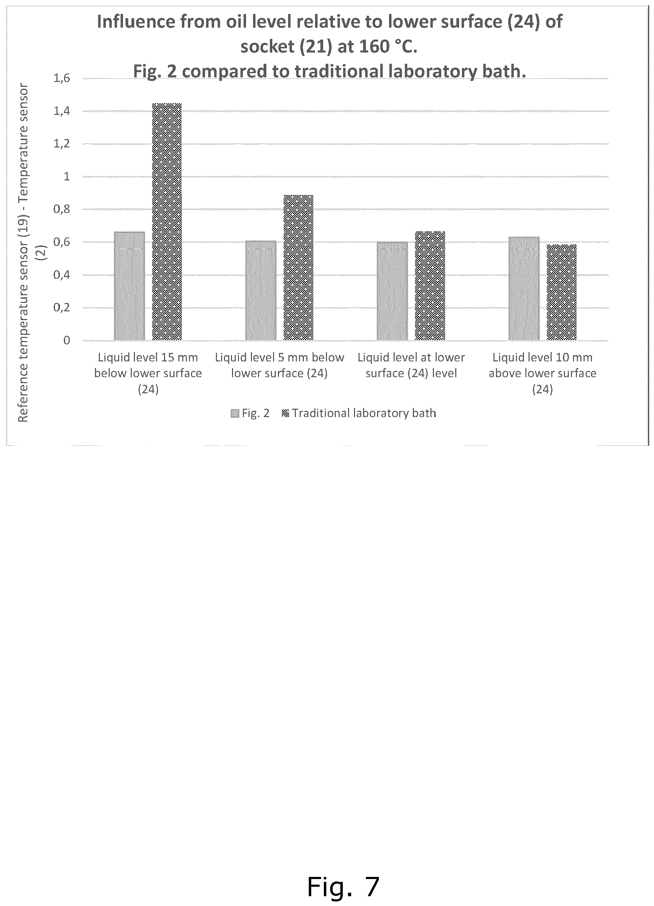

Reference is made to fig. 7 illustrating experimental results in terms of temperature deviations when using multiple embodiments of the invention. In comparison, the embodiment of the invention as illustrated in fig. 2 is shown as solid columns. The pattern filled columns illustrates laboratory baths. The experiments were carried out as comparative experiments between laboratory baths, which is a test facility in which the temperature of a fluid is determinable and controllable to an extend where it is assigned to be a true temperature, and in embodiment of the invention as illustrated in fig. 2. During the experiments, the temperature sensor 2 is submerged in the bath at a temperature of 160 degrees Celsius and the temperature of the temperature sensor (2) is measured for different liquid levels relative to the lower surface (24) of the temperature sensor (2). When testing the embodiment fig. 2, the temperature sensor (2) was placed on the supporting flange (27). When testing in laboratory baths, the temperature sensor (2) was supported by other means. Results from the embodiment of the invention as illustrated in fig. 1 is similar to laboratory baths.

In some embodiments, the system 1 further comprises a container 32 arranged within the cavity 9 and configured to a hold liquid. The diameter or equivalent diameter of the container 32 is normally smaller than the inner diameter or equivalent diameter of the receptacle 6 so that the container 32 fits snugly within the receptacle with a clearance between the container and the receptacle. Typically dimension of the clearance is such as 0.7 mm smaller than the inner diameter of the receptacle 6, such as 0.3mm smaller than the inner diameter of the receptacle 6, such as 0.1mm smaller than the inner diameter of the receptacle 6. The lower limit for the clearance is selected so as to allow removal of the container, typically by hand. The diameter or equivalent diameter of the container 32 is measured from one inner surface of the tubular wall 16 to the opposite inner surface of the tubular wall 16. The container 32 is preferably used when multiple mediums are used for calibration(s), such as wet-medium calibration and a dry calibration, where the wet-medium calibration can be carried out with container 32 arranged in the cavity 9 and once a dry calibration is to be carried, the system can easily be configured for that purpose by removing the container 32.

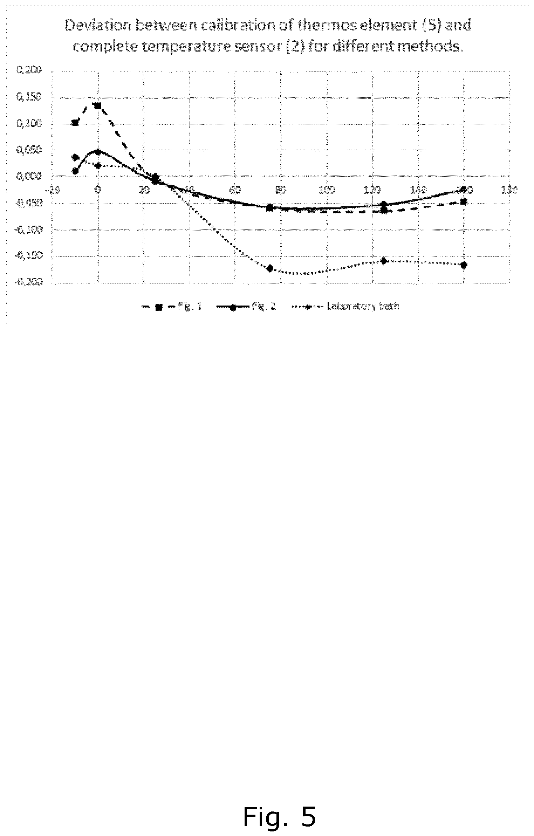

Reference is made to fig. 5 illustrating experimental results in terms of temperature deviations when using multiple embodiments of the invention. In comparison, the embodiment of the invention as illustrated in fig. 1 is shown as a dashed graph, the second embodiment of the invention as illustrated in fig. 2 is shown as a solid line and measurements in laboratory bath is shown as a dotted line. The experiments were carried out as comparative experiments between laboratory baths, which is a test facility in which the temperature of a fluid is determinable and controllable to an extend where it is assigned to be a true temperature, and in embodiments of the invention. During the experiments, the temperature sensor 2 is submerged in the bath and the temperature was increased from -10 degrees Celsius to 160 degrees Celsius for both the laboratory baths and the embodiment of the invention. The deviation from calibration of solely the thermos element 5 was calculated based on both laboratory bath measurements and measurements obtained by embodiments of the invention.

With reference to figure 9, an embodiment of an elongate fluid directing element is shown having similarities with the embodiment shown in fig. 3. However, the through going openings 25 arranged in different positions relatively to the reference thermos element cavity 33 as can be realized by a comparison of the two figures in question. In fig. 9, the interior contours of elongate fluid direction elements are illustrated by dotted lines, which inter alia reveals a through-going passage 38 axially aligned with the notch 39. By this, wiring of the reference thermos element to be placed in the cavity 33 may be led through the through going passage, the through going opening 25 and through the notch 39 and out and away from the notch 39. In embodiments, where the reference thermos element has a size allowing it to pass through the notch 39 and the through going passage 38, the reference thermos element may be arranged in the cavity 33 by leading it through the notch 39 and the through going passage 38. The embodiment of fig. 3 may comprise a similar through going passage extending between the notch 39 and the through going opening 33.

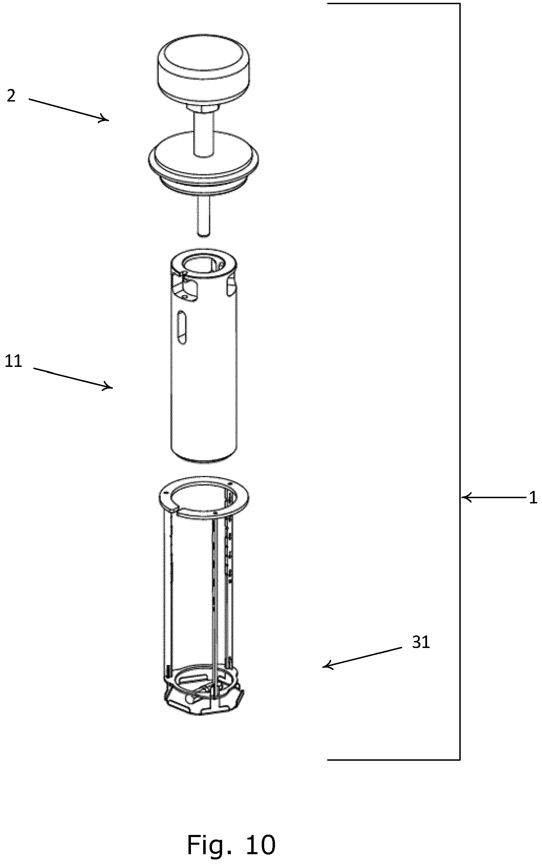

With reference to figure 10, one embodiment of a system for calibrating a temperature sensor is illustrated, comprising a temperature sensor 2, an elongate fluid directing element 11, a suspension element and a receptacle 6 (not shown).

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention.

LIST OF REFERENCE SYMBOLS USED

1 System for calibrating a temperature sensor
2 Temperature sensor
3 Elongate element
4 First end
5 Electrical thermos element
6 Receptacle
7 tubular wall
8 Bottom
9 Cavity
10 Energy source
11 Elongate fluid directing element
12 Upper end
13 Lower end
14 Outer flow passage
15 Outer surface of fluid directing element
16 Inner surface of tubular wall
17 Controller
18 Inner flow passage
19 Reference thermos element
20 Stirrer
21 Socket
23 Abutment surface
24 Lower surface
25 through going opening
26 Opening
27 Supporting flange
28 Basin
29 Through going opening of basin
30 Basin opening

31 Suspension element
32 Container
33 Reference thermos element cavity
34 Extending member
35 Supporting rim
36 Suspension element bottom
37 Reference thermos element void
38 Through going passage
39 Notch

**Claims**

1. A system (1) for calibrating a temperature sensor (2), said system comprising

   • said temperature sensor (2) comprising an elongate element (3) having at a first end (4) a thermos element (5), preferably being an electrical thermos element;
   • a receptacle (6) comprising a tubular wall (7), such as a cylindrical wall, closed at a lower end by a bottom (8) thereby defining an open ended cavity (9) configured to hold a liquid and to receive at least a part of said elongate element (3) so that the first end (4) with the thermos element (5) is contained within cavity (9);
   • a controllable energy source (10) configured to add to or remove heat from the cavity (9);
   • an elongate fluid directing element (11) being a tubular element, such as a cylindrical element, having outer diameter or equivalent diameter being less than an inner diameter or equivalent inner diameter of the tubular wall (7) and having an upper end (12) and a lower end (13), said fluid directing element (11) is arranged within the cavity (9) and being dimensioned to provide an outer flow passage (14) between an outer surface (15) of the fluid directing element (11) and an inner surface (16) of tubular wall (7) and an inner flow passage (18) at an inner side of the elongate fluid directing element (11), wherein the outer flow passage (15) and the inner flow passage (18) are in fluid communication at the upper end (12) and at the lower end (13);
   • a reference thermos element (19) arranged to sense the temperature within the cavity (9);
   • a controller (17) configured to control the amount of heat added to or removed from the cavity (9).

2. A system according to claim 1, wherein the controller is further configured to obtain measurements from the reference thermos element (19) and thermos element (5) and provide a calibration for the thermos element (5) on the basis of said measurements.

3. A system according to claim 1 or 2, further comprising a stirrer (20) to promote a flow of fluid going upward in the outer flow passage (14) and downward in the inner flow passage (18) or vice versa, said stirrer (20) preferably comprising a magnetic stirrer or a stirrer arranged on a shaft rotated by an electrical motor.

4. A system according to any one of the preceding claims, wherein said temperature sensor (2) comprising at a position distal to the first end (4) of the elongate element (3) a socket (21) from which the elongate element (3) extend, and wherein said socket (21) has a thickness and a diameter or equivalent diameter being larger than a diameter or equivalent diameter of the elongate element (3).

5. A system according to any one of the preceding claims, wherein the elongate fluid directing element (11) comprising

   • an outer diameter or equivalent outer diameter and a wall thickness providing an abutment surface (23) at the upper end (12) and wherein the temperature sensor (2) is arranged with at least a part of a lower surface (24) of the socket (21) abutting said abutment surface (23) to provide a thermal contact between the fluid directing element and the socket (21),
   • at least one through going opening (25) or at least two through going openings distributed, preferably along a perimeter of the fluid directing element at the upper end (12) thereof, said through going opening(s) (25) provides said fluid communication at the upper end (12),

   and wherein an opening (26) is provided between said lower end (13) and said bottom (8).

6. A system according to claim 5, wherein the lower end (13) of the elongate fluid directing element is bevelled.

7. A system according to claim 5 or 6, wherein elongate fluid directing element (11) comprising at its upper end (12) a supporting flange (27) extending horizontally beyond a cross section of the open end of the cavity (9) so that the temperature sensor is supported at the open end of the cavity (9).

8. A system according to any one of the preceding claims, further comprising a basin (28) arranged at the open end of the cavity (9), said basin (28) comprising an bottom with an through going opening (29) so that the basin (28) is in fluid communication with the cavity (9) and an wall protruding upwardly from the bottom and having an internal diameter or equivalent diameter being larger than the internal diameter or equivalent diameter of the open end of the cavity (9).

9. A system according to any one of the preceding claims, wherein the elongate fluid directing element (11) has a wall thickness of larger than 2.0 mm, such as larger than 3.0 mm, preferably larger than 5.0 mm and smaller than 12.0 mm such as smaller than 10.0 mm and preferably a wall thickness of 9.00 mm.

10. A system according to any one of the preceding claims, wherein the elongate fluid directing element (11) has a height being less than a height of the tubular wall (7).

11. A system according to any one of the preceding claims, wherein the elongate fluid directing element (11) is made of metal, such as made solely from aluminium, copper, brass or stainless steel or a combination thereof.

12. A system according to any one of the preceding claims, further comprising a suspension element (31) arranged in the receptacle (6), to suspend the elongate fluid directing element (11).

13. A system according to any one of the preceding claims, wherein the electrical thermos element (5) comprising a thermistor such as a negative temperature coefficient resistor or a positive temperature coefficient resistor.

14. A system according to any one of the preceding claims, wherein the electrical thermos element (5) comprising a thermocouple.

15. A system according to any one of the preceding claims, wherein the reference thermos element (19) is arranged within the cavity (9) at a position having substantially the same temperature as the thermos element (5), such as at the same horizontal level at which the thermos element (5) is arranged.

16. A system according to any one of the preceding claims, wherein the elongate element (3), the elongate fluid directing element (11) and the tubular wall (7) are co-axially arranged.

17. A system according to any one of the preceding claims, wherein the energy source comprising one or more electrical heating elements, such as ohmic heating element(s), Peltier element(s), a Stirling cooler or combinations thereof.

18. A method of calibrating a temperature sensor (2), said method is utilizing a system according to any of the preceding claims, and comprising:

    • arranging the temperature sensor (2) in the cavity (9);
    • adding a fluid, such as silicon oil, water, cooking oil or an oil approved for pharmaceutical use, into the cavity (9) in an amount sufficient to submerge the elongate fluid directing element (11) and the thermos element (5) and at least a section of the elongate element (3);
    • controlling the energy source (10) to heat or cool the fluid in the cavity (9) to one or more temperatures, where the temperature(s) is(are) determined by the reference thermos element (19) or the thermos element (6);
    • when a thermal equilibrium is established in the fluid for said one or more temperatures:

        ○ determining by use of the thermos element (5) and the reference thermos element (19) a deviation between the these two temperatures, if any, and calibrate the temperature sensor (2) based on said deviation.

19. A method according to claim 18, wherein the calibration comprising determining a correction for the temperatures sensor (2), wherein the correction is an arithmetic correction or a database storing deviations as a function of measured temperatures.

**Patentansprüche**

1. System (1) zur Kalibrierung eines Temperatursensors (2), das System umfassend,

    • dass der Temperatursensor (2) ein längliches Element (3) umfasst, das an einem ersten Ende (4) ein Thermoelement (5) aufweist, das vorzugsweise ein elektrisches Thermoelement ist,
    • einen Behälter (6), der eine rohrförmige Wand (7), wie etwa eine zylindrische Wand, umfasst, die an einem unteren Ende durch einen Boden (8) geschlossen ist, wodurch ein Hohlraum (9) mit offenem Ende definiert ist, der dazu konfiguriert ist, eine Flüssigkeit aufzubewahren und mindestens einen Teil des länglichen Elements (3) zu empfangen, sodass das erste Ende (4) mit dem Thermoelement (5) innerhalb des Hohlraums (9) enthalten ist,
    • eine steuerbare Energiequelle (10), die dazu konfiguriert ist, dem Hohlraum (9) Wärme zuzuführen oder zu entziehen;
    • ein längliches Fluidleitelement (11), das ein rohrförmiges Element, wie etwa ein zylindrisches Element, ist, das einen Außendurchmesser oder gleichwertigen Durchmesser aufweist, der kleiner ist als ein Innendurchmesser oder gleichwertiger Innendurchmesser der rohrförmigen Wand (7), und ein oberes Ende (12) und ein unteres Ende (13) aufweist, wobei das Fluidleitelement (11) innerhalb des Hohlraums (9) angeordnet und dazu dimensioniert ist, einen äußeren Strömungsdurchgang (14) zwischen einer Außenfläche (15) des Fluidleitelements (11) und einer Innenfläche (16) der rohrförmigen Wand (7) und einen inneren Strömungsdurchgang (18) an einer Innenseite des länglichen Fluidleitelements (11) bereitzustellen, wobei der äußere Strömungsdurchgang (15) und der innere Strömungsdurchgang (18) an dem oberen Ende (12) und an dem unteren Ende (13) in Fluidverbindung stehen;

• ein Referenz-Thermoelement (19), das dazu angeordnet ist, die Temperatur innerhalb des Hohlraums (9) zu erfassen;

• eine Steuerung (17), die dazu konfiguriert ist, die dem Hohlraum (9) zugeführte oder entzogene Menge von Wärme zu steuern.

**2.** System nach Anspruch 1, wobei die Steuerung weiter dazu konfiguriert ist, Messungen von dem Referenz-Thermoelement (19) und dem Thermoelement (5) zu erhalten und auf der Basis der Messungen eine Kalibrierung für das Thermoelement (5) bereitzustellen.

**3.** System nach Anspruch 1 oder 2, weiter umfassend einen Rührer (20), um eine Fluidströmung zu fördern, die in dem äußeren Strömungsdurchgang (14) nach oben und in dem inneren Strömungsdurchgang (18) nach unten oder umgekehrt verläuft, wobei der Rührer (20) vorzugsweise einen Magnetrührer oder einen Rührer, der auf einer durch einen Elektromotor gedrehten Welle angeordnet ist, umfasst.

**4.** System nach einem der vorstehenden Ansprüche, wobei der Temperatursensor (2) an einer Position distal zu dem ersten Ende (4) des länglichen Elements (3) einen Sockel (21) aufweist, von dem sich das längliche Element (3) erstreckt, und wobei der Sockel (21) eine Dicke und einen Durchmesser oder gleichwertigen Durchmesser aufweist, der größer ist als ein Durchmesser oder gleichwertiger Durchmesser des länglichen Elements (3).

**5.** System nach einem der vorstehenden Ansprüche, das längliche Fluidleitelement (11) umfassend

• einen Außendurchmesser oder gleichwertigen Außendurchmesser und eine Wanddicke, die eine Anlagefläche (23) an dem oberen Ende (12) bereitstellen, und wobei der Temperatursensor (2) so angeordnet ist, dass mindestens ein Teil einer unteren Fläche (24) des Sockels (21) an der Anlagefläche (23) anliegt, um einen thermischen Kontakt zwischen dem Fluidleitelement und dem Sockel (21) bereitzustellen,

• mindestens eine durchgehende Öffnung (25) oder mindestens zwei verteilte durchgehende Öffnungen, vorzugsweise entlang eines Umfangs des Fluidleitelements an dem oberen Ende (12) davon, wobei die durchgehende(n) Öffnung(en) (25) die Fluidverbindung an dem oberen Ende (12) bereitstellt/bereitstellen,

und wobei eine Öffnung (26) zwischen dem unteren Ende (13) und dem Boden (8) bereitgestellt ist.

**6.** System nach Anspruch 5, wobei das untere Ende (13) des länglichen Fluidleitelements abgeschrägt ist.

**7.** System nach Anspruch 5 oder 6, wobei das längliche Fluidleitelement (11) an seinem oberen Ende (12) einen Stützflansch (27) umfasst, der sich horizontal über einen Querschnitt des offenen Endes des Hohlraums (9) hinaus erstreckt, sodass der Temperatursensor an dem offenen Ende des Hohlraums (9) gestützt ist.

**8.** System nach einem der vorstehenden Ansprüche, weiter umfassend ein Becken (28), das an dem offenen Ende des Hohlraums (9) angeordnet ist, wobei das Becken (28) einen Boden mit einer durchgehenden Öffnung (29) umfasst, sodass das Becken (28) in Fluidverbindung mit dem Hohlraum (9) steht, und eine Wand, die von dem Boden nach oben hervorsteht und einen Innendurchmesser oder gleichwertigen Durchmesser aufweist, der größer ist als der Innendurchmesser oder gleichwertige Durchmesser des offenen Endes des Hohlraums (9).

**9.** System nach einem der vorstehenden Ansprüche, wobei das längliche Fluidleitelement (11) eine Wanddicke von mehr als 2,0 mm, wie etwa mehr als 3,0 mm, vorzugsweise mehr als 5,0 mm und weniger als 12,0 mm, wie etwa weniger als 10,0 mm, und vorzugsweise eine Wanddicke von 9,00 mm aufweist.

**10.** System nach einem der vorstehenden Ansprüche, wobei das längliche Fluidleitelement (11) eine Höhe aufweist, die geringer ist als eine Höhe der rohrförmigen Wand (7).

**11.** System nach einem der vorstehenden Ansprüche, wobei das längliche Fluidleitelement (11) aus Metall hergestellt ist, wie etwa ausschließlich aus Aluminium, Kupfer, Messing oder Edelstahl oder einer Kombination davon hergestellt.

**12.** System nach einem der vorstehenden Ansprüche, weiter umfassend ein Aufhängungselement (31) umfasst, das in dem Behälter (6) angeordnet ist, um das längliche Fluidleitelement (11) aufzuhängen.

**13.** System nach einem der vorstehenden Ansprüche, wobei das elektrische Thermoelement (5) einen Thermistor, wie etwa einen Widerstand mit negativem Temperaturkoeffizienten oder einen Widerstand mit positivem Temperaturkoeffizienten, umfasst.

14. System nach einem der vorstehenden Ansprüche, wobei das elektrische Thermoelement (5) ein Thermopaar umfasst.

15. System nach einem der vorstehenden Ansprüche, wobei das Referenz-Thermoelement (19) innerhalb des Hohlraums (9) an einer Position angeordnet ist, die im Wesentlichen die gleiche Temperatur wie das Thermoelement (5) aufweist, wie etwa auf der gleichen horizontalen Ebene, auf der das Thermoelement (5) angeordnet ist.

16. System nach einem der vorstehenden Ansprüche, wobei das längliche Element (3), das längliche Fluidleitelement (11) und die rohrförmige Wand (7) koaxial angeordnet sind.

17. System nach einem der vorstehenden Ansprüche, wobei die Energiequelle ein oder mehrere elektrische Heizelemente umfasst, wie etwa (ein) ohmsche(s) Heizelement(e), (ein) Peltier-Elemente), einen Stirling-Kühler oder Kombinationen davon.

18. Methode zur Kalibrierung eines Temperatursensors (2), wobei die Methode ein System nach einem der vorstehenden Ansprüche nutzt und Folgendes umfasst:

• Anordnen des Temperatursensors (2) in dem Hohlraum (9);
• Zuführen eines Fluids, wie etwa Silikonöl, Wasser, Speiseöl oder ein zur pharmazeutischen Verwendung zugelassenes Öl, in den Hohlraum (9) in einer Menge, die dazu ausreicht, das längliche Fluidleitelement (11) und das Thermoelement (5) und mindestens einen Abschnitt des länglichen Elements (3) unterzutauchen;
• Steuern der Energiequelle (10), um das Fluid in dem Hohlraum (9) auf eine oder mehrere Temperaturen zu erwärmen oder abzukühlen, wobei die Temperatur(en) durch das Referenz-Thermoelement (19) oder das Thermoelement (6) bestimmt wird/werden;
• wenn in dem Fluid ein thermisches Gleichgewicht für die eine oder mehreren Temperaturen hergestellt ist:

◦ Bestimmen einer Abweichung zwischen diesen zwei Temperaturen, falls vorhanden, durch Verwenden des Thermoelements (5) und des Referenz-Thermoelements (19) und Kalibrieren des Temperatursensors (2) basierend auf der Abweichung.

19. Methode nach Anspruch 18, wobei die Kalibrierung Bestimmen einer Korrektur für den Temperatursensor (2) umfasst, wobei die Korrektur eine arithmetische Korrektur oder eine Datenbank, die Abweichungen als eine Funktion von gemessenen Temperaturen speichert, ist.

## Revendications

1. Système (1) d'étalonnage d'un capteur de température (2), ledit système comprenant

• ledit capteur de température (2) comprenant un élément allongé (3) comportant à une première extrémité (4) un élément thermos (5), qui est de préférence un élément thermos électrique ;
• un réceptacle (6) comprenant une paroi tubulaire (7), telle qu'une paroi cylindrique, fermé à une extrémité inférieure par un fond (8) définissant ainsi une cavité (9) à extrémité ouverte, configurée pour retenir un liquide et pour recevoir au moins une partie dudit élément allongé (3) de sorte que la première extrémité (4) comportant l'élément thermos (5) est contenue à l'intérieur de la cavité (9) ;
• une source d'énergie réglable (10) configurée pour introduire ou extraire de la chaleur dans ou de la cavité (9) ;
• un élément allongé directeur (11) de fluide, qui est un élément tubulaire, tel qu'un élément cylindrique, ayant un diamètre ou diamètre équivalent externe qui est inférieur à un diamètre interne ou diamètre interne équivalent de la paroi tubulaire (7) et présentant une extrémité supérieure (12) et une extrémité inférieure (13), ledit élément directeur (11) de fluide est disposé à l'intérieur de la cavité (9) et étant dimensionné pour procurer un passage d'écoulement externe (14) entre une surface externe (15) de l'élément directeur (11) de fluide et une surface interne (16) de paroi tubulaire (7) et un passage d'écoulement interne (18) à un côté interne de l'élément allongé directeur (11) de fluide, le passage d'écoulement externe (15) et le passage d'écoulement interne (18) étant en communication fluidique à l'extrémité supérieure (12) et à l'extrémité inférieure (13) ;
• un élément thermos de référence (19) disposé pour capter la température à l'intérieur de la cavité (9) ;
• un régulateur (17) configuré pour régler la quantité de chaleur introduite dans ou extraite de la cavité (9).

2. Système selon la revendication 1, dans lequel le régulateur est en outre configuré pour obtenir des mesures depuis l'élément thermos de référence (19) et l'élément thermos (5) et fournir un étalonnage pour l'élément thermos (5) sur la base desdites mesures.

3. Système selon la revendication 1 ou 2, comprenant en outre un agitateur (20) pour faciliter un écoulement de fluide circulant vers le haut dans le passage d'écoulement externe (14) et vers le bas dans le passage d'écoulement interne (18) ou vice versa, ledit agitateur (20) comprenant de préférence un agitateur magnétique ou un agitateur disposé sur un arbre entraîné en rotation par un moteur électrique.

4. Système selon l'une quelconque des revendications précédentes, dans lequel ledit capteur de température (2) comprend à une position distale par rapport à la première extrémité (4) de l'élément allongé (3) une douille (21) à partir de laquelle s'étend l'élément allongé (3), et dans lequel ladite douille (21) a une épaisseur et un diamètre ou diamètre équivalent qui est plus grand qu'un diamètre ou diamètre équivalent de l'élément allongé (3).

5. Système selon l'une quelconque des revendications précédentes, dans lequel l'élément allongé directeur (11) de fluide comprend

    • un diamètre externe ou diamètre externe équivalent et une épaisseur de paroi offrant une surface de butée (23) à l'extrémité supérieure (12) et dans lequel le capteur de température (2) est disposé avec au moins une partie d'une surface inférieure (24) de la douille (21) venant buter contre ladite surface de butée (23) pour procurer un contact thermique entre l'élément directeur de fluide et la douille (21),
    • au moins une ouverture traversante (25) ou au moins deux ouvertures traversantes réparties, de préférence le long d'un périmètre de l'élément directeur de fluide à l'extrémité supérieure (12) de ce dernier, ladite/lesdites ouverture(s) traversante(s) (25) procurant ladite communication fluidique à l'extrémité supérieure (12),

    et dans lequel une ouverture (26) est disposée entre ladite extrémité inférieure (13) et ledit fond (8).

6. Système selon la revendication 5, dans lequel l'extrémité inférieure (13) de l'élément allongé directeur de fluide est biseautée.

7. Système selon la revendication 5 or 6, dans lequel l'élément allongé directeur (11) de fluide comprend à son extrémité supérieure (12) une bride de soutien (27) s'étendant horizontalement au-delà d'une section transversale de l'extrémité ouverte de la cavité (9) de sorte que le capteur de température est soutenu à l'extrémité ouverte de la cavité (9).

8. Système selon l'une quelconque des revendications précédentes, comprenant en outre une cuvette (28) disposée à l'extrémité ouverte de la cavité (9), ladite cuvette (28) comprenant un fond comportant une ouverture traversante (29) de sorte que la cuvette (28) est en communication fluidique avec la cavité (9) et une paroi faisant saillie vers le haut à partir du fond et ayant un diamètre ou diamètre équivalent interne qui est plus grand que le diamètre ou diamètre équivalent interne de l'extrémité ouverte de la cavité (9).

9. Système selon l'une quelconque des revendications précédentes, dans lequel l'élément allongé directeur (11) de fluide a une épaisseur de paroi supérieure à 2,0 mm, telle que supérieure à 3,0 mm, de préférence supérieure à 5,0 mm et inférieure à 12,0 mm, telle qu'inférieure à 10,0 mm et de préférence une épaisseur de paroi de 9,00 mm.

10. Système selon l'une quelconque des revendications précédentes, dans lequel l'élément allongé directeur (11) de fluide a une hauteur qui est inférieure à une hauteur de la paroi tubulaire (7).

11. Système selon l'une quelconque des revendications précédentes, dans lequel l'élément allongé directeur (11) de fluide est constitué de métal, tel que constitué uniquement d'aluminium, de cuivre, de laiton ou d'acier inoxydable ou d'une association de ceux-ci.

12. Système selon l'une quelconque des revendications précédentes, comprenant en outre un élément de suspension (31) disposé dans le réceptacle (6), pour suspendre l'élément allongé directeur (11) de fluide.

13. Système selon l'une quelconque des revendications précédentes, dans lequel l'élément thermos électrique (5) comprend une thermistance telle qu'une résistance à coefficient de température négatif ou une résistance à coefficient de température positif.

14. Système selon l'une quelconque des revendications précédentes, dans lequel l'élément thermos électrique (5) comprend un thermocouple.

15. Système selon l'une quelconque des revendications précédentes, dans lequel l'élément thermos de référence (19) est disposé à l'intérieur de la cavité (9) à une position ayant sensiblement la même température que l'élément thermos (5), par exemple au même niveau horizontal que celui sur lequel est disposé l'élément thermos (5).

**16.** Système selon l'une quelconque des revendications précédentes, dans lequel l'élément allongé (3), l'élément allongé directeur (11) de fluide et la paroi tubulaire (7) sont disposés coaxialement.

**17.** Système selon l'une quelconque des revendications précédentes, dans lequel la source d'énergie comprend un ou plusieurs éléments chauffants électriques, tels qu'élément(s) chauffant(s) ohmique(s), élément(s) Peltier, un refroidisseur Stirling ou des associations de ceux-ci.

**18.** Procédé d'étalonnage d'un capteur de température (2), ledit procédé utilisant un système selon l'une quelconque des revendications précédentes, et comprenant les étapes consistant à :

• disposer le capteur de température (2) dans la cavité (9) ;
• introduire dans la cavité (9) un fluide, tel que de l'huile de silicone, de l'eau, de l'huile de cuisson ou une huile approuvée pour usage pharmaceutique, en une quantité suffisante pour submerger l'élément allongé directeur (11) de fluide et l'élément thermos (5) et au moins un segment de l'élément allongé (3) ;
• régler la source d'énergie (10) pour chauffer ou refroidir le fluide dans la cavité (9) jusqu'à une ou plusieurs températures, la/les température(s) étant déterminée(s) par l'élément thermos de référence (19) ou l'élément thermos (6) ;
• lorsqu'un équilibre thermique est établi dans le fluide pour ladite/lesdites une ou plusieurs température(s) :

o déterminer en utilisant l'élément thermos (5) et l'élément thermos de référence (19) un écart entre ces deux températures, s'il existe, et étalonner le capteur de température (2) sur la base dudit écart.

**19.** Procédé selon la revendication 18, dans lequel l'étalonnage comprend déterminer une correction pour le capteur de température (2), la correction étant une correction arithmétique ou une base de données mémorisant des écarts en fonction de températures mesurées.

Fig. 1

Fig. 2

Fig. 3

Fig. 4

Deviation between calibration of thermos element (5) and complete temperature sensor (2) for different methods.

Fig. 5

Fig. 6

Fig. 7

Fig. 8

Fig. 9

Fig. 10

**EP 4 148 405 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 209979097 U